(19) Europäisches Patentamt
European Patent Office
Office européen des brevets

(11) **EP 1 825 223 B1**

(12) **FASCICULE DE BREVET EUROPEEN**

(45) Date de publication et mention
de la délivrance du brevet:
**29.01.2020 Bulletin 2020/05**

(21) Numéro de dépôt: **05847993.2**

(22) Date de dépôt: **19.12.2005**

(51) Int Cl.:
*G01D 5/16* *(2006.01)*    *G01P 3/487* *(2006.01)*
*G01D 5/14* *(2006.01)*

(86) Numéro de dépôt international:
**PCT/FR2005/051111**

(87) Numéro de publication internationale:
**WO 2006/064169 (22.06.2006 Gazette 2006/25)**

(54) **CAPTEUR DE POSITION A BOUCLE DE COURANT ET ROULEMENT EQUIPE D'UN TEL CAPTEUR**

STROMSCHLEIFENPOSITIONSSENSOR UND WÄLZLAGER DAMIT

CURRENT-LOOP POSITION SENSOR AND ANTIFRICTION BEARING EQUIPPED WITH SAME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.12.2004 FR 0453053**

(43) Date de publication de la demande:
**29.08.2007 Bulletin 2007/35**

(73) Titulaire: **S.N.R. ROULEMENTS**
**74000 Annecy (FR)**

(72) Inventeurs:
• **DURET, Christophe**
**F-74600 Quintal (FR)**
• **BLANCHIN, Olivier**
**F-74000 Annecy (FR)**

(74) Mandataire: **Sayettat, Julien Christian et al**
**Strato-IP**
**63, Boulevard de Ménilmontant**
**75011 Paris (FR)**

(56) Documents cités:
**FR-A- 2 792 403    FR-A- 2 852 464**
**US-A- 5 047 716    US-A- 5 589 768**

• **PATENT ABSTRACTS OF JAPAN vol. 007, no. 160 (P-210), 14 juillet 1983 (1983-07-14) & JP 58 068615 A (SHARP KK), 23 avril 1983 (1983-04-23)**

**Description**

L'invention concerne un système de détermination de la position d'un élément mobile par rapport à une structure fixe, ainsi qu'un roulement équipé d'un tel système pour la détermination de la position angulaire de la bague tournante par rapport à la bague fixe.

Dans de nombreuses applications, l'on souhaite connaître en temps réel et avec une qualité constante la position d'un élément mobile par rapport à une structure fixe. En particulier, cette connaissance peut être utilisée pour déterminer en outre la vitesse, l'accélération ou le sens de déplacement de l'élément.

On connaît par le brevet US5047716 le principe général de capteur de mouvement comprenant un support présentant un encodage magnétique rotatif ou linéaire. Dans cette solution de l'art antérieur, le support encodé présente une fréquence spatiale λ. Il interagit avec une série de capteurs magnétorésistifs espacés de (n-1/2) λ délivrant des signaux en opposition de phase. Ce détecteur nécessite un nombre important de capteurs. Elle concerne par ailleurs un domaine d'application général, et non pas l'intégration dans un roulement de roue d'un véhicule automobile.

L'invention trouve typiquement son application dans la détermination d'au moins un paramètre de déplacement d'un véhicule automobile dont au moins un roulement de roue comprend un système de détermination, ledit paramètre pouvant être utilisé dans des systèmes de contrôle de la dynamique du véhicule comme par exemple l'ABS ou l'ESP.

Il est connu, notamment du document FR-A-2 792 403, d'utiliser un codeur destiné à être solidaire d'un élément mobile et un capteur fixe comprenant des éléments sensibles qui sont disposés à distance de lecture du codeur. Les éléments sensibles sont agencés de sorte à délivrer des signaux en quadrature sensiblement parfaite, à partir desquels la position relative du codeur par rapport au capteur ainsi que des paramètres de déplacement dudit codeur peuvent être calculés.

Ce type de système de détermination donne parfaitement satisfaction lorsque des éléments sensibles à effet Hall sont disposés à distance d'entrefer d'un codeur magnétique multipolaire.

Les documents JP2008-256900 A et WO 2006/028183 A1 divulguent également des capteurs connus de l'état de la technique.

Toutefois, notamment pour des éléments sensibles de type résistifs, il existe encore un besoin pour un conditionnement qui permette de déterminer de façon fiable et précise la position d'un élément mobile. En particulier, un tel conditionnement doit permettre d'effectuer dans le domaine analogique :

- l'amplification, afin de donner au signal un niveau suffisant pour le reste de la chaîne de traitement ;
- la correction de l'offset, afin de lui enlever une composante continue non souhaitée ;
- la suppression de bruits, par exemple de bruit de mode commun ou de bruit haute fréquence ;
- la correction des phénomènes de dérive, par exemple en température ;
- le filtrage, par exemple pour éviter les repliements de spectre.

Pour ce faire, il est connu d'utiliser un montage en pont de Wheatstone qui nécessite d'utiliser des résistances parfaitement ajustées pour annuler l'offset du pont, de positionner précisément ces résistances par rapport au signal émis par le codeur, et de ne pas introduire de bruits de mesure supplémentaires. L'ensemble de ces contraintes étant difficilement rempli de façon industrielle, l'utilisation de ce type de montage conduit à des précisions de détermination qui ne sont pas toujours satisfaisantes.

En outre, dans le cas particulier de la détection d'un signal spatial pseudo sinusoïdal avec des éléments résistifs de type magnétorésistif, notamment à effet tunnel, l'ensemble des contraintes des ponts de Wheatstone est encore plus difficile à remplir. En particulier, du fait de la structure de tels éléments résistifs qui comprennent la superposition de couches nanométriques, il est très difficile de fixer précisément la valeur de la résistance sous excitation nulle.

L'invention vise notamment à résoudre les problèmes mentionnés ci-dessus en proposant un système de détermination prévoyant un conditionnement des éléments résistifs, notamment de type magnétorésistif, qui est adapté pour une détermination fiable et modulable de la position de l'élément mobile.

En particulier, le système de détermination selon l'invention permet un échantillonnage spatial d'un signal pseudo sinusoïdal émis par le codeur et un traitement des signaux qui permet une détermination précise de façon particulièrement tolérante vis-à-vis des contraintes tant au niveau des éventuels défauts des signaux issus des éléments résistifs que du positionnement desdits éléments par rapport au signal pseudo sinusoïdal émis.

A cet effet, et selon un premier aspect, l'invention propose un système de détermination de la position d'un élément mobile par rapport à une structure fixe, ledit système comprenant :

- un codeur destiné à être solidaire de l'élément mobile de sorte à se déplacer conjointement à lui, ledit codeur étant agencé pour émettre un signal spatial pseudo sinusoïdal qui est représentatif de la position du codeur ;
- un capteur destiné à être solidaire de la structure fixe, ledit capteur comprenant :

- au moins deux éléments résistifs aptes à délivrer chacun un signal $V_i$ fonction du signal pseudo sinusoïdal émis, lesdits éléments résistifs étant disposés à distance de lecture du signal pseudo sinusoïdal émis par le codeur ;
- un montage en boucle de courant entre les éléments résistifs ;
- un dispositif de traitement des signaux $V_i$ qui est agencé pour fournir, en fonction des signaux $V_i$, deux signaux respectivement SIN et COS en quadrature et de même amplitude ;

- un dispositif de calcul de la position de l'élément, ledit dispositif comprenant des moyens de calcul de la position du codeur à partir des signaux SIN et COS de sorte à en déduire la position de l'élément à partir de la position calculée du codeur.

Selon un deuxième aspect, l'invention propose un roulement comprenant un bague fixe et une bague tournante par rapport à ladite bague fixe au moyen de corps roulants, ledit roulement étant équipé d'un tel système pour la détermination de la position angulaire de la bague tournante par rapport à la bague fixe, dans lequel le codeur est solidarisé à la bague tournante et le capteur est solidaire de la bague fixe.

D'autres objets et avantages de l'invention apparaîtront au cours de la description qui suit, faite en référence aux dessins annexés, dans lesquels :

- la figure 1 est une représentation fonctionnelle d'un premier mode de réalisation d'un capteur d'un système de détermination selon l'invention ;

- la figure 2 est une représentation d'un positionnement de deux éléments résistifs par rapport à un signal spatial approximable localement à une portion de sinusoïde, de sorte à obtenir un déphasage de $\pi/2$ entre les signaux issus des éléments résistifs ;

- la figure 3 est une représentation fonctionnelle d'une variante du capteur selon la figure 1 ;

- la figure 4 est une représentation fonctionnelle d'un deuxième mode de réalisation d'un capteur d'un système de détermination selon l'invention ;

- la figure 5 est une représentation analogue à la figure 2 pour le positionnement de trois éléments résistifs ;

- les figures 6a et 6b sont des représentations analogues à la figure 2 pour le positionnement de quatre éléments résistifs ; sur la figure 6a le signal spatial est approximable localement à une portion de sinusoïde et sur la figure 6b le signal spatial est sinusoïdal ;

- les figures 7 et 8 sont des représentations fonctionnelles d'un troisième mode de réalisation d'un capteur d'un système de détermination selon l'invention ; la figure 9 est une variante de la représentation de la figure 8 ;

- la figure 10 est une représentation schématique en coupe longitudinale d'un roulement équipé d'un système de détermination selon l'invention.

L'invention concerne un système de détermination de la position d'un élément mobile par rapport à une structure fixe qui comprend :

- un codeur 1 destiné à être solidaire de l'élément mobile de sorte à se déplacer conjointement à lui, ledit codeur étant agencé pour émettre un signal spatial pseudo sinusoïdal qui est représentatif de la position du codeur 1 ; et
- un capteur 2 destiné à être solidaire de la structure fixe, ledit codeur comprenant au moins deux éléments résistifs 3 aptes à délivrer chacun un signal $V_i$ fonction du signal pseudo sinusoïdal émis par le codeur 1.

Dans le cadre de l'invention, un grand nombre d'ensemble codeur 1 / éléments résistifs 3 peut être utilisé parmi lesquels on peut citer les codeurs électriques, magnétiques, optiques, thermiques ou acoustiques, et les éléments résistifs à base d'éléments qui sont aptes à présenter une impédance qui varie en fonction de chacun des types de signaux émis par ces codeurs. Dans un exemple particulier, le codeur 1 est de type magnétique et comprend une succession alternée de pôles magnétiques Nord et Sud de sorte à émettre un signal pseudo sinusoïdal magnétique, et les éléments résistifs 3 sont de type magnétorésistif, notamment magnétorésistance, magnétorésistance géante ou magnétorésistance à effet tunnel.

Dans le cadre de l'invention, on entend par signal pseudo sinusoïdal tout signal qui est sinusoïdal par nature ou dont au moins une portion peut être approximée correctement par une sinusoïde.

Dans un exemple de mise en œuvre de l'invention, les éléments résistifs 3 sont du type décrit dans le document FR-A-2 852 400, c'est-à-dire comprenant un empilement d'un élément de référence, d'un élément de séparation et d'un élément sensible au champ magnétique. L'élément de référence et l'élément sensible présentent respectivement une première et une deuxième anisotropies magnétiques suivant une première et une deuxième directions. L'élément sensible comprend la superposition d'une couche d'un matériau ferromagnétique et d'une couche d'un matériau antiferromagnétique qui est agencée pour obtenir un moment magnétique dont la composante orientée dans la direction du champ à mesurer varie réversiblement en fonction de l'intensité du champ magnétique à mesurer, et linéairement dans une gamme de champ ajustable.

A titre d'exemple, un tel élément sensible 3 magnétorésistif à effet tunnel est formé par l'empilement :

Verre / Ta (5 nm) / Co (10 nm) / IrMn (10 nm) / Co (10 nm) / AlOx / Co (2 nm) / $Co_{80}Pt_{20}$ (5 nm) / Pt (4nm). Le verre constitue le substrat et la bicouche Ta/Co est la couche tampon. L'élément sensible est composé de la bicouche IrMn (10 nm) / Co (10 nm). L'élément de référence Co (2 nm) / $Co_{80}Pt_{20}$ (5 nm) est constitué de cobalt additionné de platine pour augmenter le champ coercitif. La couche Pt (4nm) est une couche de protection.

En disposant les éléments résistifs 3 à distance de lecture du signal pseudo sinusoïdal émis par le codeur 1, l'invention permet de déterminer la position d'un élément mobile en translation ou en rotation par rapport à la structure fixe, le déplacement pouvant être périodique en fonction du temps ou encore discret. En outre, on peut prévoir de déterminer la distance séparant les éléments résistifs 3 du codeur 1 au moyen d'un système de détermination selon l'invention.

Le capteur 2 du système de détermination comprend un montage en boucle de courant entre les éléments résistifs 3 et un dispositif de traitement des signaux $V_i$ qui est agencé pour fournir, en fonction des signaux $V_i$, deux signaux respectivement SIN et COS en quadrature et de même amplitude, ladite amplitude étant proportionnelle à l'amplitude du signal émis par le codeur 1.

Le capteur 2 peut être prévu en une partie, c'est-à-dire comprenant un support sur lequel les éléments résistifs 3 et le conditionnement (source de courant et dispositif de traitement) ainsi qu'éventuellement le dispositif de calcul 7 sont disposés.

En variante, le capteur 2 peut comprendre deux parties, une première portant les éléments résistifs 3 à distance de lecture du codeur 1 et une deuxième partie comprenant le conditionnement ainsi qu'éventuellement le dispositif de calcul 7, les deux parties étant reliées entre elles par des fils de connexion en nombre au moins égal au nombre d'éléments résistifs plus un. Cette dernière réalisation présente notamment l'avantage de pouvoir disposer le conditionnement à distance du codeur 1 et donc de l'élément mobile, de sorte à éviter les perturbations comme une température élevée, des variations de température ou de l'humidité qui sont potentiellement gênantes pour le bon fonctionnement du conditionnement, en particulier des amplificateurs différentiels.

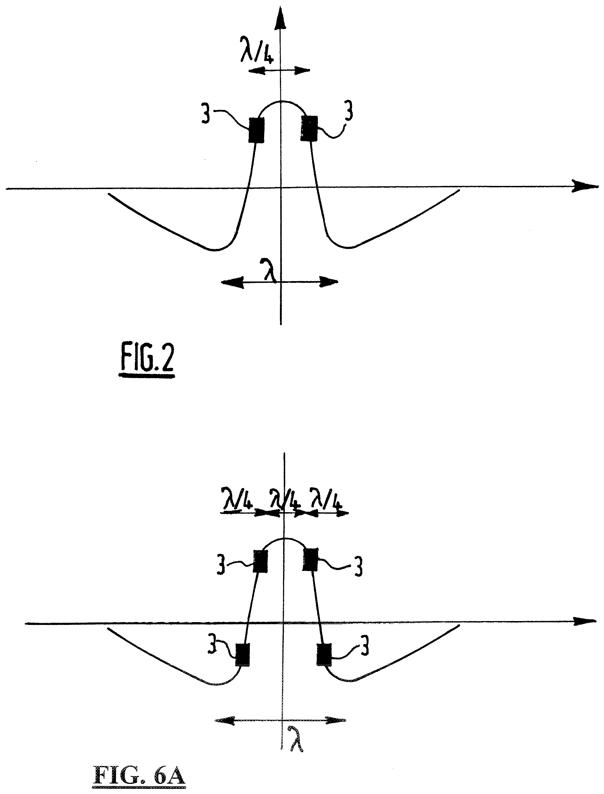

Les éléments résistifs 3 montés en série dans la boucle de courant sont placés le long du signal pseudo sinusoïdal et espacés régulièrement (figures 2, 5, 6).

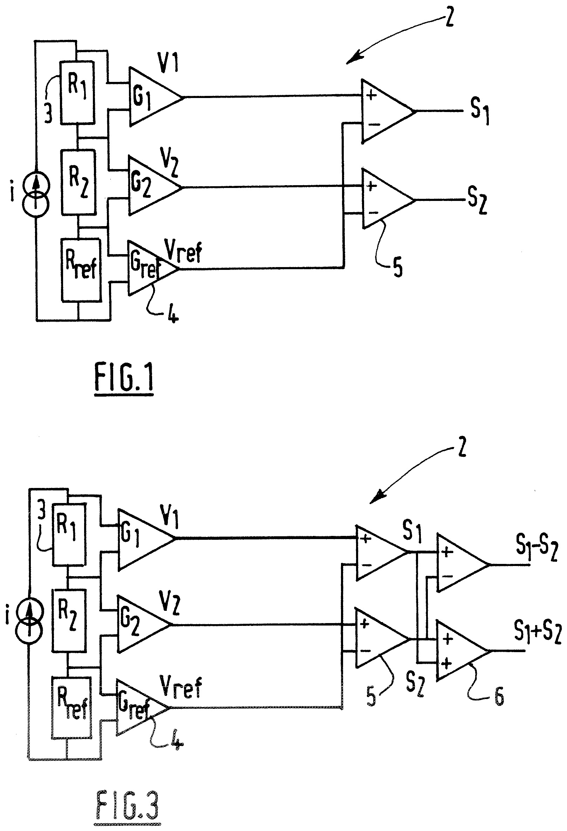

En relation avec les figures 1 à 9, on décrit trois modes de réalisation du montage en boucle de courant et du dispositif de traitement, les éléments résistifs 3 étant à base d'éléments résistifs. En particulier, chaque élément sensible 3 peut comprendre soit un bloc de plusieurs éléments résistifs unitaires qui sont combinés pour obtenir une valeur de résistance moyennée qui est représentative de la valeur de la résistance au niveau de la position du bloc, soit un seul élément résistif.

Dans le montage en boucle de courant, les signaux de variation des résistances sont égaux à :
$[R_{0i} + \Delta R_i \sin(\theta+(i-1)\varphi)]i_c$, $R_{0i}$ étant la valeur au repos de la résistance $R_i$, $\varphi$ le déphasage spatial entre les éléments résistifs 1, $i_c$ l'intensité du courant dans la boucle.

Dans le cas statique, l'angle $\theta$ est l'angle de la sinusoïde. Dans le cas d'une déformation dynamique, l'angle $\theta$ est égal par exemple à $\omega t$, avec $\omega=2\pi/T$ (T étant la période temporelle de la sinusoïde).

Le dispositif de traitement comprend un premier étage d'amplificateurs différentiels 4, chacun desdits amplificateurs étant respectivement branché aux bornes d'un élément sensible 3 de sorte à délivrer un signal $V_i = G_i [R_{0i} + \Delta R_i \sin(\theta+(i-1)\varphi)]i_c$, où $G_i$ est le gain dudit amplificateur différentiel.

Le dispositif de traitement peut comprendre en outre un étage de filtrage des signaux non représenté.

Selon le premier mode de réalisation (figures 1 et 3), le capteur 2 comprend deux éléments résistifs 3, le montage en boucle de courant comprenant en outre un élément résistif de référence dont la valeur $R_{ref}$ est fixe en fonction des signaux émis par le codeur 1. Le signal $V_{ref}$ aux bornes de l'élément de référence est alors égal à $G_{ref} R_{ref} i_c$.

Le dispositif de traitement comprend en outre un deuxième étage d'amplificateurs différentiels 5 qui est agencé pour soustraire le signal $V_{ref}$ aux signaux $V_i$, c'est-à-dire former les signaux :

$$S_1 = [(G_1 R_{01} - G_{ref} R_{ref}) + G_1 \Delta R_1 \sin\theta]i_c \; ;$$

$$S_2 = [(G_2R_{02} - G_{ref}R_{ref}) + G_2\Delta R_2 \sin(\theta + \varphi)]i_c.$$

Si on choisit $G_1$, $G_2$ et $G_{ref}$ tels que $G_1R_{01} = G_2R_{02} = G_{ref}R_{ref}$, nous avons les signaux suivants :

$$S_1 = [G_1\Delta R_1 \sin\theta]i_c \; ;$$

$$S_2 = [G_2\Delta R_2 \sin(\theta + \varphi)]i_c.$$

qui sont centrés sur zéro par la soustraction du signal de référence $G_{ref}R_{ref}i_c$.

Par ailleurs, les éléments résistifs 3 peuvent être conçus de sorte à avoir la même sensibilité, c'est à dire $G_1\Delta R_1 = G_2\Delta R_2 = G\Delta R$. Ainsi, les signaux s'écrivent :

$$S_1 = [G\Delta R \sin\theta]i_c \; ;$$

$$S_2 = [G\Delta R \sin(\theta + \varphi)]i_c.$$

Dans le cas particulier où les éléments résistifs sont disposés de sorte que $\varphi = \pi/2$, c'est-à-dire la distance entre les éléments résistifs 3 est égale à $\lambda/4$ ($\lambda$ étant la période de la sinusoïde, voir figure 2), les signaux s'écrivent :

$$S_1 = [G\Delta R \sin\theta]i_c \; ;$$

$$S_2 = [G\Delta R \cos\theta]i_c.$$

Par conséquent, dans ce cas particulier, le système de détermination représenté sur la figure 1 permet d'obtenir directement des signaux COS = $S_2$ et SIN = $S_1$ qui sont en quadrature et de même amplitude.

En relation avec la figure 3, on décrit un dispositif de traitement qui permet d'obtenir des signaux SIN et COS quelle que soit la valeur du déphasage spatial $\varphi$ entre les éléments résistifs 3.

Pour ce faire, le dispositif de traitement comprend un troisième étage à deux amplificateurs différentiels 6 de sorte à délivrer les signaux $S_1 - S_2$ et $S_1 + S_2$.

En effet, ces expressions s'écrivent :

$$S_1 - S_2 = [-2G\Delta R \sin(\frac{\varphi}{2}) \times \cos(\theta + \frac{\varphi}{2})]i_c \; ;$$

et

$$S_1 + S_2 = [2G\Delta R \cos(\frac{\varphi}{2}) \times \sin(\theta + \frac{\varphi}{2})]i_c.$$

Nous avons donc $S_1 + S_2 =$ SIN et $S_1 - S_2 =$ COS.

Notons que dans le cas où $\varphi$ est différent de $\pi/2$, l'amplitude des signaux $(S_1 - S_2)$ et $(S_1 + S_2)$ est différente. Pour égaliser ces amplitudes, on peut prévoir qu'au moins un amplificateur différentiel 6 du troisième étage présente un gain ajustable. En particulier, le gain de l'amplificateur formant le signal COS peut être ajusté à $\cos(\frac{\varphi}{2})/\sin(\frac{\varphi}{2})$.

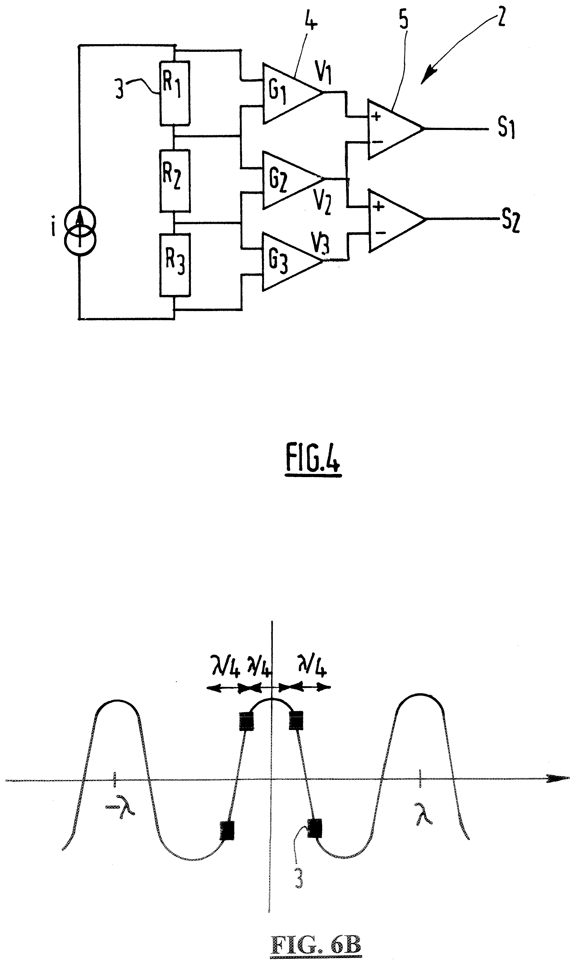

Selon le deuxième mode de réalisation (figure 4), le capteur comprend trois éléments résistifs 3 et les trois amplificateurs différentiels du premier étage 4 présentent un gain réglable $G_i$.

En sortie du premier étage d'amplificateurs différentiels 4, on obtient donc les signaux :

$$V_1 = G_1 \times (R_{01} + \Delta R_1 \sin\theta )i_c$$

$$V_2 = G_2 \times (R_{02} + \Delta R_2 \sin(\theta + \varphi))i_c$$

$$V_3 = G_3 \times (R_{03} + \Delta R_3 \sin(\theta + 2\varphi))i_c$$

Selon la réalisation représentée sur la figure 4, le deuxième étage est agencé pour former les signaux :

$$S_1 = V_1 - V_2 = \left[(G_1 R_{01} - G_2 R_{02}) + G_1 \Delta R_1 \sin\theta - G_2 \Delta R_2 \sin(\theta + \varphi)\right] \times i_c \ \textbf{(1)}$$

$$S_2 = V_2 - V_3 = \left[(G_2 R_{02} - G_3 R_{03}) + G_2 \Delta R_2 \sin(\theta + \varphi) - G_3 \Delta R_3 \sin(\theta + 2\varphi)\right] \times i_c \ \textbf{(2)}$$

En ajustant les gains $G_i$ de sorte que : $G_1 R_{01} = G_2 R_{02} = G_3 R_{03}$, et en supposant que les capteurs ont la même sensibilité, c'est à dire que $G_1 \Delta R_1 = G_2 \Delta R_2 = G_3 \Delta R_3 = G \Delta R$, les différences (1) et (2) deviennent :

$$S_1 = \left[G \Delta R[\sin\theta - \sin(\theta + \varphi)]\right] \times i_c \ \textbf{(3)}$$

$$S_2 = \left[G \Delta R[\sin(\theta + \varphi) - \sin(\theta + 2\varphi)]\right] \times i_c \ \textbf{(4)}$$

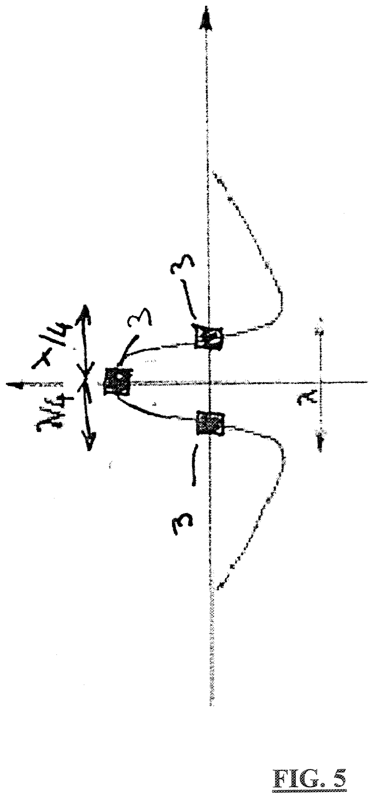

Dans le cas particulier où les éléments résistifs 3 sont disposés à distance du signal pseudo sinusoïdal de sorte que $\varphi = \pi/2$, c'est-à-dire le long de la période spatiale et équidistants de $\lambda/4$ (voir figure 5), les différences (3) et (4) s'écrivent :

$$S_1 = \left\lfloor \sqrt{2} G \Delta R \cos(\theta + \pi/4) \right\rfloor \times i_c$$

$$S_2 = \left\lfloor \sqrt{2} G \Delta R \sin(\theta + \pi/4) \right\rfloor \times i_c$$

Par conséquent, dans ce cas particulier, le capteur 2 représenté sur la figure 4 permet d'obtenir directement des signaux COS = $S_1$ et SIN = $S_2$ en quadrature et de même amplitude.

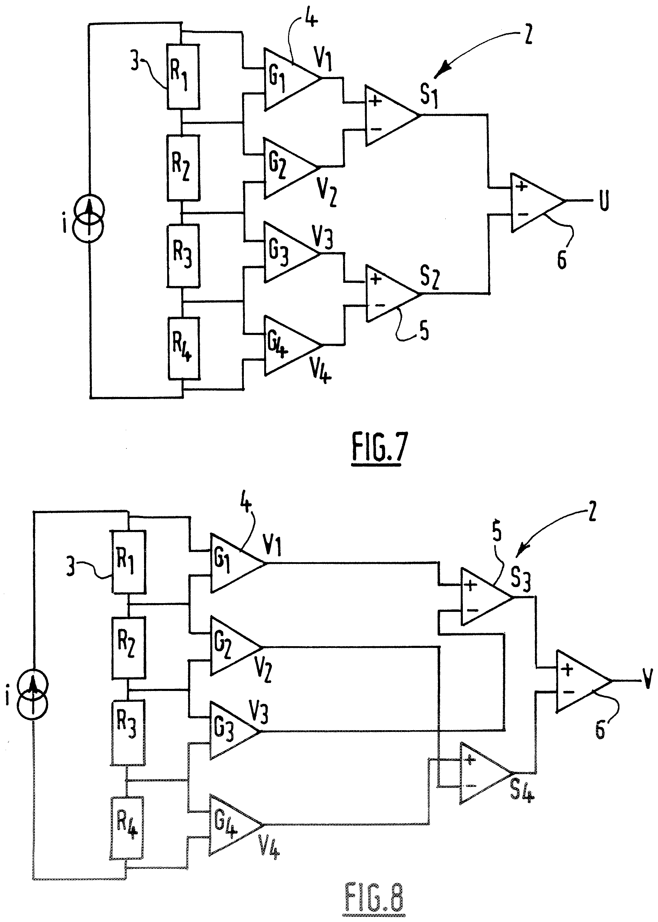

Selon le troisième mode de réalisation (figures 7 à 9), le capteur comprend quatre éléments résistifs 3 et les quatre amplificateurs différentiels du premier étage 4 présentent un gain réglable $G_i$.

En sortie du premier étage d'amplificateurs différentiels 4, on obtient donc les signaux :

$$V_1 = G_1 \times (R_{01} + \Delta R_1 \sin\theta )i_c$$

$$V_2 = G_2 \times (R_{02} + \Delta R_2 \sin(\theta + \varphi))i_c$$

$$V_3 = G_3 \times (R_{03} + \Delta R_3 \sin(\theta + 2\varphi))i_c$$

$$V_4 = G_4 \times (R_{04} + \Delta R_4 \sin(\theta + 3\varphi))i_c$$

Le dispositif de traitement comprend en outre un deuxième étage d'amplificateurs différentiels 5 agencés pour soustraire des signaux issus du premier étage d'amplificateurs différentiels 4.

Selon la réalisation représentée sur la figure 7, le deuxième étage est agencé pour former les signaux :

$$S_1 = V_1 - V_2 = \left[(G_1 R_{01} - G_2 R_{02}) + G_1 \Delta R_1 \sin\theta - G_2 \Delta R_2 \sin(\theta + \varphi)\right] \times i_c \ \textbf{(5)}$$

$$S_2 = V_3 - V_4 = \left[(G_3 R_{03} - G_4 R_{04}) + G_3 \Delta R_3 \sin(\theta + 2\varphi) - G_4 \Delta R_4 \sin(\theta + 3\varphi)\right] \times i_c \ \textbf{(6)}$$

En ajustant les gains $G_i$ de sorte que : $G_1 R_{01} = G_2 R_{02} = G_3 R_{03} = G_4 R_{04}$, et en supposant que les capteurs ont la même sensibilité, c'est à dire que $G_1 \Delta R_1 = G_2 \Delta R_2 = G_3 \Delta R_3 = G_4 \Delta R_4 = G \Delta R$, les différences (5) et (6) deviennent :

$$S_1 = \left[G \Delta R[\sin\theta - \sin(\theta + \varphi)]\right] \times i_c$$

$$S_2 = \left[G \Delta R[\sin(\theta + 2\varphi) - \sin(\theta + 3\varphi)]\right] \times i_c$$

En relation avec les figures 7 à 9, on décrit un dispositif de traitement qui permet d'obtenir des signaux SIN et COS quelle que soit la valeur du déphasage spatial $\varphi$ entre les éléments résistifs 3.

Pour ce faire, le deuxième étage d'amplificateurs différentiels 5 est agencé pour délivrer quatre signaux et le dispositif traitement comprend un troisième étage d'amplificateurs différentiels 6 agencé pour soustraire deux à deux les quatre signaux issus du deuxième étage.

Le deuxième étage délivre les signaux $S_1$ et $S_2$ selon les relations (5) et (6) mentionnées ci-dessus, mais également de façon analogue les signaux $S_3 = V_1 - V_3$ et $S_4 = V_4 - V_2$.

Le troisième étage comprend deux amplificateurs différentiels 6 représentés respectivement sur les figures 7 et 8 par souci de clarté, de sorte à délivrer les signaux :

$$U = [S_1 - S_2] \ ;$$

et

$$V = [S_3 - S_4]$$

Soit à partir des relations (3) et (4) :

$$U = [-4G \Delta R \sin(\varphi) \times \sin(\frac{\varphi}{2}) \times \sin(\theta + \frac{3\varphi}{2})]i_c$$

$$V = [-4G \Delta R \sin(\varphi) \times \cos(\frac{\varphi}{2}) \times \cos(\theta + \frac{3\varphi}{2})]i_c$$

Nous avons donc U = SIN et V = COS.

Notons que dans le cas où $\varphi$ est différent de $\pi/2$, l'amplitude des signaux U et V est différente. Pour égaliser ces amplitudes, on peut prévoir qu'au moins un amplificateur différentiel 6 du troisième étage présente un gain réglable.

En particulier, le gain de l'amplificateur 6 formant le signal U peut être ajusté à $\cos(\frac{\varphi}{2})/\sin(\frac{\varphi}{2})$, $\varphi$ étant connu et constant en tant que paramètre d'adéquation entre le positionnement des éléments résistifs 3 et le signal à mesurer.

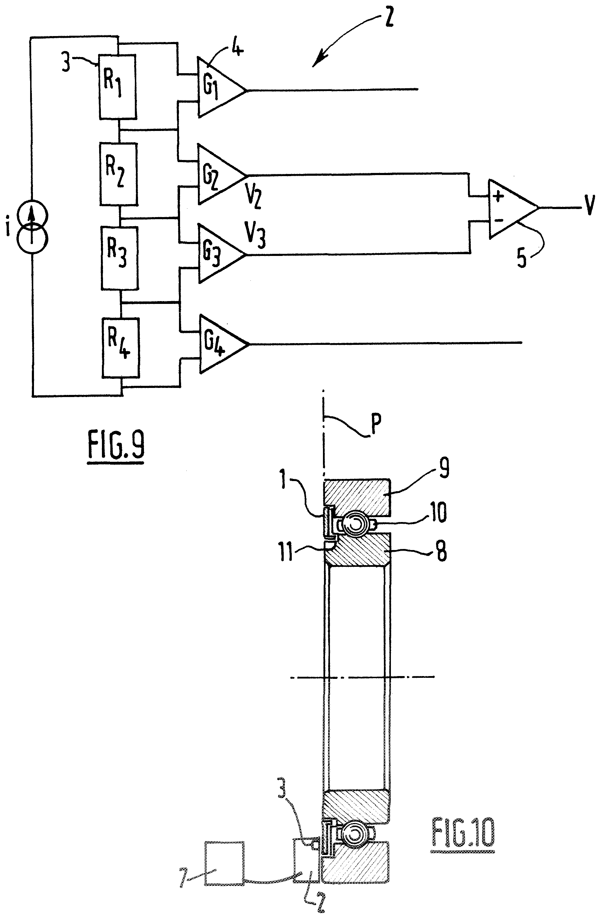

En variante de la réalisation représentée sur les figures 7 et 8, le troisième étage du dispositif de traitement comprend un amplificateur 6 conformément à la figure 7 et le deuxième étage un amplificateur 5 conformément à la figure 9 qui est agencé pour délivrer le signal $S_3 = V_2 - V_3$. Ainsi, les signaux délivrés par le dispositif de traitement 2 sont :

$$U = [S_1 - S_2] \; ;$$

et

$$V = 2S_3$$

Cette variante est particulièrement adaptée pour le cas où l'amplitude des signaux $V_i$ ne peut pas être considérée comme identique, c'est-à-dire que les éléments 3 ne détectent pas une sinusoïde de même amplitude, ce qui est notamment le cas quand les éléments résistifs 3 sont inclinés par rapport au codeur 1.

Le système de détermination selon l'invention comprend en outre un dispositif de calcul 7 de la position de l'élément qui peut éventuellement être intégré dans le capteur 2 ou être logé dans un calculateur hôte.

Le dispositif de calcul 7 comprend des moyens de calcul de la position du codeur 1 à partir des signaux SIN et COS en quadrature et de même amplitude, de sorte à en déduire la position de l'élément à partir de la position calculée du codeur 1. Un tel dispositif de calcul 7, connu en soit, peut prévoir de calculer l'expression $SIN^2 + COS^2$ pour déterminer l'amplitude du signal, l'arctan(SIN/COS) pour déterminer l'angle du signal ou encore prévoir des moyens d'interpolation et de comptage des fronts créés à partir des signaux SIN et/ou COS pour obtenir la position de façon incrémentale. Le dispositif de calcul 7 peut également comprendre des moyens de recalage de la position de l'élément par rapport à la position calculée du codeur 1.

En outre, le dispositif de calcul peut comprendre des moyens de détermination, à partir de la position calculée, d'au moins un paramètre de déplacement de l'élément, notamment de la vitesse, de l'accélération ou du sens de déplacement dudit élément par rapport à la structure fixe.

L'invention concerne également un roulement tel que représenté sur la figure 10 qui est équipé d'un système de détermination de la position angulaire de la bague tournante 8 par rapport à la bague fixe 9.

Le roulement comprend une bague extérieure fixe 9 destinée à être associée à un organe fixe, une bague intérieure tournante 8 destinée à être mise en rotation par l'organe tournant et des corps roulants 10 disposés entre lesdites bagues.

Dans le mode de réalisation représenté, le codeur 1 est surmoulé sur une portée cylindrique annulaire d'une armature 11 qui est associée, par exemple par emmanchement, sur une face de la bague intérieure 8. En particulier, le codeur 1 est formé d'un anneau dont la face extérieure comprend une succession de pôles magnétiques Nord et Sud avec une largeur polaire constante.

Le codeur 1 est associé à la bague tournante 8 de sorte que la face extérieure dudit codeur soit sensiblement contenue dans le plan P d'une face latérale de la bague fixe 9. Cette caractéristique, notamment divulguée dans le document EP-0 607 719 issu de la demanderesse, permet d'une part de protéger le codeur 1 à l'intérieur du roulement et d'autre part de pouvoir dissocier le capteur 2 du roulement en gardant la maîtrise de l'entrefer. Ainsi, le codeur 1 peut être soit fixé à la bague extérieure 9, soit associé à l'organe fixe avec les éléments résistifs 3 à distance de lecture du codeur 1. En particulier, le capteur 2 peut comprendre quatre éléments 3 magnétorésistifs à effet tunnel tel que décrit ci-dessus.

Parmi les avantages de l'utilisation d'un système de détermination selon l'invention on peut citer, :

- l'absence de résistance de référence dans le cas du deuxième et du troisième mode de réalisation ;
- l'absence de toute nécessité d'utiliser des éléments résistifs 3 de sensibilités opposés comme c'est le cas pour un montage en pont de Wheatstone. Il n'est ainsi pas nécessaire d'orienter les couches de référence de certains éléments magnétorésistifs à effet tunnel dans des sens différents ;
- la possibilité d'ajuster le conditionnement à des résistances de valeur à vide $R_{0i}$ différentes, connaissant par exemple une certaine dispersion du procédé de fabrication des éléments résistifs 3 ;
- de pouvoir éloigner les éléments résistifs 3 du conditionnement (dans une zone où ce dernier est par exemple protégé des hautes températures) tout en restant insensible à la résistance des fils de connexion ainsi qu'aux perturbations électriques captées sur ces mêmes fils (bruit de mode commun) ;
- de pouvoir adapter le capteur à des signaux de différentes périodes spatiales.

En outre, le système de détermination permet comme il se doit d'amplifier le signal, d'enlever sa composante continue, et ce en étant insensible aux dérives de la valeur à vide des différentes résistances.

**Revendications**

1. Système de détermination de la position d'un élément mobile par rapport à une structure fixe, ledit système comprenant :

   - un codeur (1) destiné à être solidaire de l'élément mobile de sorte à se déplacer conjointement à lui, ledit codeur étant agencé pour émettre un signal spatial pseudo sinusoïdal qui est représentatif de la position du codeur (1) ;
   - un capteur (2) destiné à être solidaire de la structure fixe, ledit capteur comprenant :

      - au moins deux éléments résistifs (3) aptes à délivrer chacun un signal $V_i$ fonction du signal pseudo sinusoïdal émis, lesdits éléments résistifs étant disposés à distance de lecture du signal pseudo sinusoïdal émis par la codeur (1) ;
      - un montage en boucle de courant entre les éléments résistifs (3) ;
      - un dispositif de traitement des signaux $V_i$ qui est agencé pour fournir, en fonction des signaux $V_i$, deux signaux respectivement SIN et COS en quadrature et de même amplitude ;

      - un dispositif de calcul (7) de la position de l'élément mobile, ledit dispositif comprenant des moyens de calcul de la position du codeur (1) à partir des signaux SIN et COS de sorte à en déduire la position de l'élément à partir de la position calculée du codeur (1).

2. Système de détermination selon la revendication 1, **caractérisé en ce que** le dispositif de traitement comprend un premier étage d'amplificateurs différentiels (4), chacun desdits amplificateurs étant respectivement branché aux bornes d'un élément sensible (3) de sorte à délivrer un signal $V_i$.

3. Système de détermination selon la revendication 2, **caractérisé en ce qu'**il comprend trois éléments sensibles (3) et **en ce que** le dispositif de traitement comprend un premier étage de trois amplificateurs différentiels (4), chacun desdits amplificateurs étant respectivement branché aux bornes d'un élément sensible (3) de sorte à délivrer un signal $V_i$.

4. Système de détermination selon la revendication 2 ou 3, **caractérisé en ce que** le capteur (2) comprend deux éléments résistifs (3), le montage en boucle de courant comprenant en outre un élément de référence ($R_{ref}$) délivrant un signal de référence $V_{ref}$ et le dispositif de traitement comprenant un deuxième étage d'amplificateurs différentiels (5) qui est agencé pour soustraire le signal $V_{ref}$ aux signaux $V_i$.

5. Système de détermination selon la revendication 4, **caractérisé en ce que** le dispositif de traitement comprend un troisième étage d'amplificateurs différentiels (6) agencé pour respectivement additionner et soustraire les signaux issus du deuxième étage d'amplificateurs différentiels (5).

6. Système de détermination selon la revendication 2, **caractérisé en ce que** le capteur (2) comprend quatre éléments résistifs (3), le dispositif de traitement comprenant un deuxième étage d'amplificateurs différentiels (5) agencé pour soustraire des signaux issus du premier étage d'amplificateurs différentiels (4).

7. Système de détermination selon la revendication 6, **caractérisé en ce que** le deuxième étage d'amplificateurs différentiels (5) est agencé pour délivrer quatre signaux, le dispositif de traitement comprenant un troisième étage d'amplificateurs différentiels (6) agencé pour soustraire deux à deux les quatre signaux issus du deuxième étage d'amplificateurs différentiels (5).

8. Système de détermination selon l'une quelconque des revendications 2 à 7, **caractérisé en ce qu'**au moins certains amplificateurs différentiels (4, 5, 6) présentent un gain réglable.

9. Système de détermination selon l'une quelconque des revendications 1 à 8, **caractérisé en ce que** les éléments résistifs (3) sont à base d'éléments résistifs présentant chacun une résistance électrique $R_i$ qui varie en fonction du signal pseudo sinusoïdal émis par le codeur (1).

10. Système de détermination selon la revendication 9, **caractérisé en ce que** les éléments résistifs (3) sont à base de magnétorésistances, de magnétorésistances géantes ou de magnétorésistances à effet tunnel, de sorte à présenter chacun une résistance électrique $R_i$ qui varie en fonction d'un signal pseudo sinusoïdal magnétique émis par le codeur (1).

11. Système de détermination selon la revendication 10, **caractérisé en ce que** le codeur (1) comprend une succession alternée de pôles magnétiques Nord et Sud.

12. Système de détermination selon l'une quelconque des revendications précédentes, **caractérisé en ce que** le dispositif de calcul (7) comprend en outre, des moyens de détermination, à partir de la position calculée, d'au moins un paramètre de déplacement de l'élément, notamment de la vitesse, de l'accélération ou du sens de déplacement dudit élément par rapport à la structure fixe.

13. Système de détermination selon l'une quelconque des revendications précédentes, **caractérisé en ce que** le capteur (2) comprend deux parties, une première partie portant les éléments résistifs (3) et une deuxième partie comprenant notamment le dispositif de traitement, les deux parties étant reliées entre elles par des fils de connexion.

14. Système de détermination selon l'une quelconque des revendications 1 à 13, **caractérisé en ce que** chaque élément sensible (3) est formé d'un bloc de plusieurs éléments résistifs unitaires.

15. Roulement comprenant un bague fixe (9) et une bague tournante (8) par rapport à ladite bague fixe au moyen de corps roulants (10), ledit roulement étant équipé d'un système selon l'une quelconque des revendications 1 à 13 pour la détermination de la position angulaire de la bague tournante (8) par rapport à la bague fixe (9), dans lequel le codeur (1) est solidarisé à la bague tournante (8) et le capteur (2) est solidaire de la bague fixe (9).

## Patentansprüche

1. System zum Bestimmen der Position eines beweglichen Elements in Bezug auf eine feste Struktur, wobei das System umfasst:

   - einen Codierer (1), der dazu bestimmt ist, fest mit dem beweglichen Element verbunden zu sein, sodass er sich gemeinsam mit demselben bewegt, wobei der Codierer dafür eingerichtet ist, ein pseudosinusförmiges räumliches Signal auszugeben, das für die Position des Codierers (1) repräsentativ ist;
   - einen Sensor (2), der dazu bestimmt ist, fest mit der festen Struktur verbunden zu sein, wobei der Sensor umfasst:

     -- mindestens zwei Widerstandelemente (3), die jedes ein Signal $V_i$ liefern können, das vom ausgegebenen pseudosinusförmigen Signal abhängig ist, wobei die Widerstandelemente in Leseabstand des vom Codierer (1) ausgegebenen pseudosinusförmigen Signals angeordnet sind;
     -- einen Stromschleifenaufbau zwischen den Widerstandelementen (3);
     -- eine Vorrichtung zum Verarbeiten der Signale $V_i$, die dafür eingerichtet ist, in Abhängigkeit von den Signalen $V_i$ zwei jeweilige Quadratursignale, SIN und COS, und derselben Amplitude bereitzustellen;

   - eine Vorrichtung zum Berechnen (7) der Position des beweglichen Elements, wobei die Vorrichtung Mittel zum Berechnen der Position des Codierers (1) auf Grundlage der SIN- und COS-Signale umfasst, um daraus die Position des Elements auf Grundlage der berechneten Position des Codierers (1) abzuleiten.

2. Bestimmungssystem nach Anspruch 1, **dadurch gekennzeichnet, dass** die Verarbeitungsvorrichtung eine erste Differenzverstärkerstufe (4) umfasst, wobei jeder der Verstärker jeweils an die Anschlüsse eines empfindlichen Elements (3) angeschlossen ist, um ein Signal $V_i$ zu liefern.

3. Bestimmungssystem nach Anspruch 2, **dadurch gekennzeichnet, dass** es drei empfindliche Elemente (3) umfasst, und dadurch, dass die Verarbeitungsvorrichtung eine erste Stufe mit drei Differenzverstärkern (4) umfasst, wobei jeder der Verstärker jeweils an die Anschlüsse eines empfindlichen Elements (3) angeschlossen ist, um ein Signal $V_i$ zu liefern.

4. Bestimmungssystem nach Anspruch 2 oder 3, **dadurch gekennzeichnet, dass** der Sensor (2) zwei Widerstandselemente (3) umfasst, wobei der Stromschleifenaufbau weiter ein Referenzelement ($R_{ref}$) umfasst, das ein Referenzsignal $V_{ref}$ liefert, und wobei die Verarbeitungsvorrichtung eine zweite Differenzverstärkerstufe (5) umfasst, die dafür eingerichtet ist, das Signal $V_{ref}$ von den Signalen $V_i$ zu subtrahieren.

**5.** Bestimmungssystem nach Anspruch 4, **dadurch gekennzeichnet, dass** die Verarbeitungsvorrichtung eine dritte Differenzverstärkerstufe (6) umfasst, die dafür eingerichtet ist, die aus der zweiten Differenzverstärkerstufe (5) stammenden Signale jeweils zu addieren und zu subtrahieren.

**6.** Bestimmungssystem nach Anspruch 2, **dadurch gekennzeichnet, dass** der Sensor (2) vier Widerstandselemente (3) umfasst, wobei die Verarbeitungsvorrichtung eine zweite Differenzverstärkerstufe (5) umfasst, die dafür eingerichtet ist, aus der ersten Differenzverstärkerstufe (4) stammende Signale zu subtrahieren.

**7.** Bestimmungssystem nach Anspruch 6, **dadurch gekennzeichnet, dass** die zweite Differenzverstärkerstufe (5) dafür eingerichtet ist, vier Signale zu liefern, wobei die Verarbeitungsvorrichtung eine dritte Differenzverstärkerstufe (6) umfasst, die dafür eingerichtet ist, die vier aus der zweiten Differenzverstärkerstufe (5) stammenden Signale paarweise zu subtrahieren.

**8.** Bestimmungssystem nach einem der Ansprüche 2 bis 7, **dadurch gekennzeichnet, dass** mindestens gewisse Differenzverstärker (4, 5, 6) eine einstellbare Verstärkung aufweisen.

**9.** Bestimmungssystem nach einem der Ansprüche 1 bis 8, **dadurch gekennzeichnet, dass** die Widerstandselemente (3) auf Widerstandselementen basieren, die jedes einen elektrischen Widerstand $R_i$ aufweisen, der in Abhängigkeit von dem vom Codierer (1) ausgegebenen pseudosinusförmigen Signal variiert.

**10.** Bestimmungssystem nach Anspruch 9, **dadurch gekennzeichnet, dass** die Widerstandselemente (3) auf Magnetowiderständen, auf Riesenmagnetowiderständen oder auf Tunneleffekt-Magnetowiderständen basieren, sodass sie jeder einen elektrischen Widerstand $R_i$ aufweisen, der in Abhängigkeit von einem vom Codierer (1) ausgegebenen pseudosinusförmigen Signal variiert.

**11.** Bestimmungssystem nach Anspruch 10, **dadurch gekennzeichnet, dass** der Codierer (1) eine wechselnde Folge von magnetischen Nord- und Südpolen umfasst.

**12.** Bestimmungssystem nach einem der vorstehenden Ansprüche, **dadurch gekennzeichnet, dass** die Rechenvorrichtung (7) weiter Mittel zum Bestimmen, auf Grundlage der berechneten Position, von mindestens einem Bewegungsparameter des Elements, insbesondere der Geschwindigkeit, der Beschleunigung oder der Bewegungsrichtung des Elements in Bezug auf die feste Struktur umfasst.

**13.** Bestimmungssystem nach einem der vorstehenden Ansprüche, **dadurch gekennzeichnet, dass** der Sensor (2) zwei Teile umfasst, einen ersten Teil, der die Widerstandselemente (3) trägt, und einen zweiten Teil, der insbesondere die Verarbeitungsvorrichtung umfasst, wobei die zwei Teile durch Verbindungsdrähte miteinander verbunden sind.

**14.** Bestimmungssystem nach einem der Ansprüche 1 bis 13, **dadurch gekennzeichnet, dass** jedes empfindliche Element (3) von einem Block aus mehreren einheitlichen Widerstandselementen gebildet wird.

**15.** Wälzlager, das einen festen Ring (9) und einen in Bezug auf den festen Ring mittels Wälzkörpern (10) drehenden Ring (8) umfasst, wobei das Wälzlager mit einem System nach einem der Ansprüche 1 bis 13 zum Bestimmen der Winkelposition des drehenden Rings (8) in Bezug auf den feststehenden Ring (9) ausgerüstet ist, wobei der Codierer (1) fest mit dem drehenden Ring (8) verbunden ist, und der Sensor (2) fest mit dem festen Ring (9) verbunden ist.

**Claims**

**1.** System for determining the position of a mobile element in relation to a fixed structure, said system comprising:

- an encoder (1) designed to be solidly attached to the mobile element in order to move together with the latter, said encoder being arranged to emit a pseudo-sinusoidal spatial signal that represents the position of the encoder (1);
- a sensor (2) designed to be solidly attachaed to the fixed structure, said sensor comprising:

  ◦ at least two resistive elements (3) each capable of delivering a signal Vi according to the pseudo-sinusoidal signal emitted, said resistive elements being disposed at read range from the pseudo-sinusoidal signal emitted by the encoder (1);

    ◦ a current loop assembly between the resistive elements (3);
    ◦ a device for processing the signals Vi which is arranged to provide, according to the signals Vi, two signals respectively SIN and COS in quadrature and with the same amplitude;

- a device (7) for calculating the position of the mobile element, said device comprising means for calculating the position of the encoder (1) from the SIN and COS signals so as to deduce the position of the element from the calculated position of the encoder (1).

2. Determination system according to claim 1, **characterised in that** the processing device comprises a first stage of differential amplifiers (4), each of said amplifiers being respectively connected to the terminals of a sensitive element (3) so as to deliver a signal Vi.

3. Determination system according to claim 2, **characterised in that** it comprises three sensitive elements (3) and **in that** the processing device comprises a first stage of three differential amplifiers (4), each of said amplifiers being respectively connected to the terminals of a sensitive element (3) so as to deliver a signal Vi.

4. Determination system according to claim 2 or 3, **characterised in that** the sensor (2) comprises two resistive elements (3), the current loop assembly also comprising a reference element (Rref) delivering a reference signal Vref and the processing device comprising a second stage of differential amplifiers (5) arranged to subtract the signal Vref from the signals Vi.

5. Determination system according to claim 4, **characterised in that** the processing device comprises a third stage of differential amplifiers (6) respectively arranged to add and subtract the signals emitted by the second stage of differential amplifiers (5).

6. Determination system according to claim 2, **characterised in that** the sensor (2) comprises four resistive elements (3), the processing device comprising a second stage of differential amplifiers (5) arranged to substract signals emitted by the first stage of differential amplifiers (4).

7. Determination system according to claim 6, **characterised in that** the second stage of differential amplifiers (5) is arranged to deliver four signals, the processing device comprising a third stage of differential amplifiers (6) arranged to subtract the four signals emitted by the second stage of differential amplifiers (5), two at a time.

8. Determination system according to any one of the claims from 2 to 7, **characterised in that** at least some of the differential amplifiers (4,5,6) have adjustable gain.

9. Determination system according to any one of the claims from 1 to 8, **characterised in that** the resistive elements (3) are based on resistive elements each of which has an electrical resistance Ri that varies according to the pseudo-sinusoidal signal emitted by the encoder (1).

10. Determination system according to claim 9, **characterised in that** the resistive elements (3) are based on magnetoresistors, so that each of them has an electrical resistance Ri that varies according to a magnetic pseudo-sinusoidal signal emitted by the encoder (1).

11. Determination system according to claim 10, **characterised in that** the encoder (1) comprises an alternating succession of north and south magnetic poles.

12. Determination system according to any one of previous claims, **characterised in that** the calculator device (7) also comprises means for determining, from the calculated position, at least one element displacement parameter, in particular the speed, acceleration or direction of movement of said element in relation to the fixed structure.

13. Determination sytem according to any one of previous claims, **characterised in that** the sensor (2) comprises two parts, a first part containing the resistive elements (3) and a second part containing in particular the processing device, the two parts being connected to each other by connection wires.

14. Determination system according to any one of claims 1 to 13, **characterised in that** each sensitive element (3) is formed by a block of several individual resistive elements.

15. Rolling bearing comprising a fixed ring (9) and a ring (8) rotation in relation to said fixed ring by means of rolling bodies (10), said rolling bearing being equipped with a system according to any one of claims 1 to 13 in order to determine the angular position of the rotating ring (8) in relation to the fixed ring (9), wherein the encoder (1) is solidly attached to the rotating ring (8) and the sensor (2) is solidly attached to the fixed ring (9) .

FIG.1

FIG.3

14

FIG.2

FIG. 6A

FIG.4

FIG. 6B

FIG.7

FIG.8

FIG.9

FIG.10

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5047716 A
- FR 2792403 A
- JP 2008256900 A
- WO 2006028183 A1
- FR 2852400 A
- EP 0607719 A